# EUROPÄISCHE PATENTSCHRIFT

(11) **EP 1 853 376 B1**
(45) Veröffentlichungstag und Bekanntmachung des Hinweises auf die Patenterteilung: **17.05.2017**
(21) Anmeldenummer: 06707053.2
(22) Anmeldetag: 17.02.2006
(51) Int. Cl.: B01D 63/02, B01D 53/22

(54) **MEMBRANMODUL FÜR DIE STOFFTRENNUNG (I)**
MEMBRANE MODULE FOR SEPARATING MATERIAL
MODULE MEMBRANE POUR SEPARER DES MATIERES

(30) Priorität: 18.02.2005 DE 102005007705
(43) Veröffentlichungstag der Anmeldung: 14.11.2007
(73) Patentinhaber: Whitefox Technologies Limited, London SW1A 2DD (GB)
(72) Erfinder: BLUM, Stephan, R., Calgary AB T2N 3X4 (CA)
(74) Vertreter: Potter Clarkson LLP
(86) Internationale Anmeldenummer: PCT/EP2006/001467
(87) Internationale Veröffentlichungsnummer: WO 2006/087214

(56) Entgegenhaltungen:
- WO-A-00/40325
- DE-A1- 3 032 417
- DE-A1- 3 513 789
- DE-A1- 4 401 014
- DE-C1- 4 438 327
- US-A- 4 265 763
- US-A- 5 211 728

## Beschreibung

Die Erfindung betrifft ein Membranmodul für die Stofftrennung durch eine Querstromfiltration, aufweisend ein Gehäuse mit wenigstens einer darin auswechselbar angeordneten, selbsttragenden Filterkartusche mit in Längsrichtung angeordneten, semipermeablen, endseitig jeweils in einem Potting eingebetteten Hohlfasermembranen, wobei die Pottings von gegen das Gehäuse abgedichteten Stirnringen gehalten sind.

Ein derartiges Membranmodul ist aus der WO 00/40325 A1 (Blum, Heggemann GmbH) bekannt. Auf diese Schrift wird zur Ergänzung der Offenbarung ausdrücklich Bezug genommen.

Bekannt ist ferner aus der deutschen Patentschrift DE 35 13 789 C2 (Kronsbein) eine Filterkerze aus einem Hohlfaserbündel, welche allerdings nicht für die Querstromfiltration vorgesehen ist.

Eine Vielzahl weiterer, gattungsgemäßer Membranmodule ist Stand der Technik. Aus der DE 44 38 327 C1 ist ein solches Modul bekannt, bei dem ein Bündel von Hohlfasermembranen von einem Sützmatel gehalten wird, der durch ein Kunststoffrohr mit Durchbrechungen ausgebildet sein kann. Aus der DE 30 32 417 A1 ist ein ähnliches Modul mit einem Stützrohr bekannt, das fest an die Pottings angeschlossen ist und so diese axial beabstandet.

Wenn die Pottings entsprechend der o. g. internationalen Patentanmeldung mit ihren Außenseiten unmittelbar an der Innenseite des Gehäuses, z. B. mit O-Ringen abgedichtet sind, kommt es vor, dass bei der Verwendung bestimmter Fluide und bestimmter darin enthaltener Lösungsmittel die Dichtungen an der Außenseite der Pottings und der Innenseite des Gehäuses verkleben. Dann kann die Filterkartusche nur unter großen Schwierigkeiten oder nur mit Beschädigung dieser Dichtungen und Filterkartuschen aus dem Gehäuse ausgebaut werden, da es sehr schwierig ist, an Ort und Stelle diese Verklebung ohne Beschädigung der O-Ringe und der Filterkartusche zu lösen.

Bei den Filterkartuschen nach der genannten internationalen Patentanmeldung ist es ferner nicht möglich, dass die Faserbündel mit endseitigen Pottings vorgefertigt, gelagert und erst später bei Bedarf ausgetauscht werden, wobei dieser Austausch möglichst einfach und schnell erfolgen soll.

Der Erfindung liegt daher die Aufgabe zugrunde, diese Probleme bei einem Membranmodul der eingangs genannten Art zu lösen. Dabei sollen auch die anderen, in der internationalen Patentanmeldung genannten Anforderungen gleichzeitig erfüllt werden. Insbesondere soll eine Montage und Demontage der Kartusche einschließlich aller Dichtelemente in das bzw. aus dem Gehäuse nur von einer Seite aus möglich sein, wobei nur das eine Ende des Gehäuses geöffnet werden muss. Ferner sollen die Membranen bei sowohl tiefen, z. B. -40 °C, als auch bei hohen Temperaturen, z. B. etwa 400°C, eingesetzt werden können. Ferner sollen das Membranmodul und die Filterkartusche eine Unempfindlichkeit der Membranen gegenüber Druckstößen gewährleisten.

Diese Aufgabe wird erfindungsgemäß durch die Merkmale des Anspruchs 1 gelöst.

Vorzugsweise fixiert die Halterung die Stirnringe an den Pottings formschlüssig mittels Vorsprüngen und Ausnehmungen.

Die Halterung ist als ein den äußeren Mantel der Kartusche bildendes Zwischenrohr ausgebildet, welches aus mehreren, miteinander verbundenen längs geteilten Schalen, insbesondere aus zwei halbrohrförmigen Halbschalen, besteht, die insbesondere Öffnungen für den Permeataustritt aufweisen.

Die längs geteilten Schalen sind lösbar, insbesondere mit Spannbändern, an den Stirnringen befestigt.

Der Vorteil des längs geteilten, lösbar mit den Stirnringen verbundenen Zwischenrohrs liegt in der Möglichkeit, eine defekte Filterkartusche auf einfache und schnelle Weise demontieren zu können, um das defekte Faserbündel mit den Pottings gegen ein neues Faserbündel auszutauschen. Vorzugsweise sind dabei die Pottings gegenüber den Stirnringen abgedichtet. Insbesondere fixiert die Halterung die Stirnringe auch relativ zueinander.

Die Pottings sind also nicht mehr unmittelbar gegenüber dem Gehäuse abgedichtet, sondern nur gegenüber den Stirnringen. Die Stirnringe selber sind gegenüber der Innenseite des Gehäuses abgedichtet.

Vorzugsweise bestehen die Stirnringe und auch die Halterung aus Metall. Wenn nun die Filterkartusche ausgewechselt werden muss, kann sie problemlos mitsamt den Stirnringen und der Halterung aus dem Gehäuse herausgezogen werden. Sollten dabei die Dichtungen zwischen den Stirnringen und dem Gehäuse verklebt sein, ist es unschädlich, wenn beim Austausch die Dichtungen beschädigt werden. Die metallischen Dichtflächen lassen sich leicht an Ort und Stelle reinigen und eine neue Dichtung anbringen. Wesentlich ist jedoch, dass die innerhalb der Stirnringe angeordneten Pottings unbeschädigt aus dem Gehäuse entfernt werden können. Die zwischen den Pottings und den Stirnringen eventuell verklebten Dichtungen lassen sich später in einer Werkstatt mit den dort vorhandenen geeigneten Hilfsmitteln und ohne Zeitdruck lösen, ohne dass eine Beschädigung der Pottings und der Hohlfasermembranen auftritt. Durch die kompakte Bauweise mit den stirnseitigen metallischen Stirnringen und der Halterung ist auch eine schnellere Montage der Filterkartusche möglich.

Wie bereits ausgeführt, sind die Stirnringe vorzugsweise gegen das Gehäuse abgedichtet.

In einer weiteren vorteilhaften Ausführungsform ist innerhalb der Kartusche ein Zulauf- und/oder Ablaufrohr angeordnet, dessen Länge nach Art eines Kompensators selbsttätig veränderbar ist und dessen Enden axial unverschiebbar mit den Pottings verbunden sind, wobei das Zulauf- und Ablaufrohr vorzugsweise mindestens zwei teleskopartig teilweise ineinander schiebbare Rohrstücke und/oder mindestens, einen in Längsrichtung wirkenden Kompensator aufweist.

Um große Produktionsdurchsätze zu erreichen, die für industrielle Anwendungen typisch sind, ist es von Vorteil, statt der Einzelmodule eine Anlage mit sehr vielen, z. B. bis etwa 20 Filterkartuschen mit jeweils einzelnen Faserbündeln zu verwenden. Daher wird vorgeschlagen, dass das Gehäuse mehrere Aufnahmeplätze für jeweils eine Filterkartusche aufweist.

Dabei können die Filterkartuschen einen gemeinsamen, außerhalb der Hohlfasern liegenden Permeatraum haben. In diesem Fall können allerdings die Faserbündel nicht einzeln abgeschaltet oder zugeschaltet werden. Die Abschaltung wäre von Vorteil, wenn einzelne Faserbündel während des Betriebes nicht mehr die volle Leistung erbringen oder beschädigt werden. Vorzugsweise ist ein gemeinsames, mit den Innenseiten der Hohlfasern verbundenes Zulaufrohr vorgesehen. Nicht benutzte Aufnahmeplätze können lösbar verschlossen sein, also "blind gesetzt" werden. Damit der Innenraum, also der Permeatraum, z. B. durch Produktdampf, erwärmt werden kann, ist es weiterhin von Vorteil, wenn der Innenraum des Gehäuses einen Wärmetauscher aufweist, also innere Verrohrungen, die möglicherweise mit Rippen versehen sind.

Um die Faserbündel auch einzeln abschalten zu können, ist es in bestimmten Fällen von Vorteil, wenn jeder Aufnahmeplatz für die Filterkartuschen ein separates Zulaufrohr aufweist, das mit entsprechenden Absperrventilen versehen ist.

Einige wesentliche Elemente der Erfindung sind die einseitige Montage der Kartusche, kein Kontakt der O-Ringe der Pottings zum Gehäuse, die durch Halbschalen gehaltenen Stirnringe sowie die Möglichkeit, mehrere Kartuschen pro Modul vorzusehen.

Ferner müssen die Faserbündel nicht selbsttragend sein, die Kartusche gibt die Stabilität. Das ist auch ein Unterscheidungskriterium gegenüber keramischen (starren) Membranen.

Halbschalen an sich sind zwar im Stand der Technik beschrieben, nicht aber Halbschalen, die Stirnringe umfassen und schon gar nicht so, dass die Montage von einer Seite erfolgen kann.

Alle Bauteile können aus Metall, aber auch aus Kunststoff bestehen.

Eine optionale Innenbeheizung.

Das Zentralrohr gibt die "selbsttragende Eigenschaft", die kein unbedingt notwendiges Merkmal der vorliegenden Erfindung ist. Der Zweck des Kompensators ist es, einen ggf. vorhandenen Sweepstrom vom Produktstrom zu trennen. Auch dies ist nicht unbedingt notwendig.

Eine Kartusche kann mehrere Faserbündel enthalten, z. B.
- 1 Faserbündel pro Kartusche, 19 Kartuschen pro Modul
- 55 Faserbündel pro Kartusche, 19 Kartuschen pro Modul
- 500 Faserbündel pro Kartusche, 1 Kartusche pro Modul.

Im Folgenden werden drei Ausführungsbeispiele der Erfindung anhand von Zeichnungen näher erläutert. Es zeigen
- Figur 1: einen Längsschnitt in Explosionsdarstellung durch ein erfindungsgemäßes Membranmodul mit einer Filterkartusche nach einem ersten Ausführungsbeispiel,
- Figur 2: einen Querschnitt durch ein Einzelmodul nach einem zweiten Ausführungsbeispiel,
- Figur 3: einen Längsschnitt entsprechend der Linie A-A in Figur 2,
- Figur 4: eine perspektivische Darstellung des Einzelmoduls nach den Figuren 2 und 3 und
- Figur 5: einen Querschnitt durch ein Multimodul nach einem dritten Ausführungsbeispiel.

In allen Zeichnungen haben gleiche Bezugszeichen die gleiche Bedeutung und werden daher gegebenenfalls nur einmal erläutert.

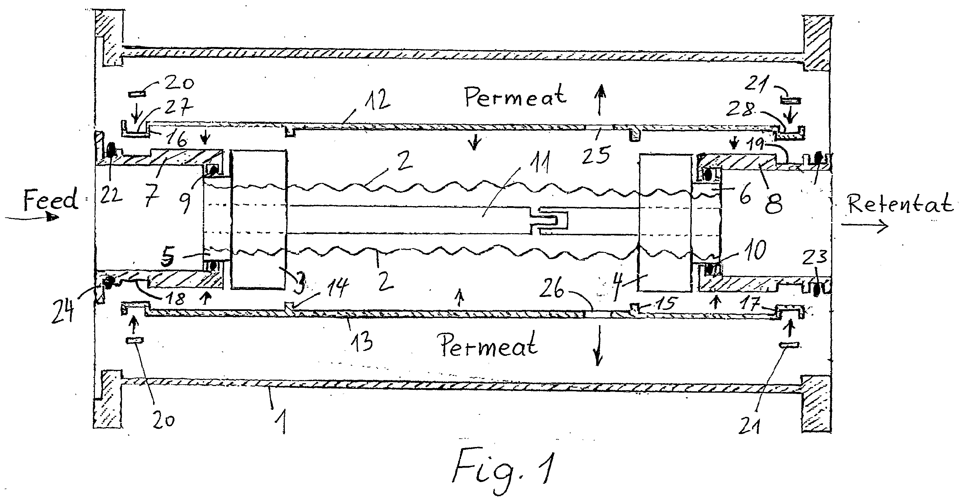

In einem zylindrischen Gehäuse 1, dessen Durchmesser in Figur 1 zu groß dargestellt ist, um die Darstellung als Explosionszeichnung zu ermöglichen, ist die Filterkartusche angeordnet. Die angedeuteten Hohlfasermembranen 2 sind in einem Bündel an ihren Enden in jeweils einer Vergussmasse eines Pottings 3,4 eingebettet. Der Durchmesser der zylindrischen Pottings 3,4 ist nach außen hin verkleinert, so dass jeweils ein Hals 5,6 ausgebildet wird. Auf die Umfangsfläche dieser Hälse 5,6 ist jeweils ein hülsenförmiger Stirnring 7,8 aufgeschoben, wobei die Pottings 3,4 gegenüber den Stirnringen 7,8 mittels einer in einer umlaufenden Nut einliegenden Dichtung 9,10, einem O-Ring, abgedichtet sind.

Beide Pottings 3,4, sind außerdem mit einem Zulauf- und Ablaufrohr 11 verbunden, welches ebenfalls in der Vergussmasse eingebettet ist und aus zwei teleskopartig teilweise ineinander schiebbaren Rohrstücken besteht, wie in der Figur 1 angedeutet wird.

Die Pottings 3,4 werden mit den Stirnringen 7,8 mittels einer Halterung 12 aus zwei halbrohrförmigen Halbschalen 45,46, die durch Längsteilung eines Rohrstückes entstanden sind, aneinander fixiert.

Dazu dienen die innenseitig umlaufenden Vorsprünge 14,15, 16,17, wobei die Vorsprünge 16,17 in umlaufende Nuten 18,19 der Stirnringe 7,8 eingreifen. Im montierten Zustand greifen zwei Spannbänder 20,21 in entsprechende umlaufende Nuten 27,28 der Halbschalen 45,46 und halten diese so fest, aber lösbar in ihrer Lage.

Beim Einbau wird die Filterkartusche in das Gehäuse 1 von links eingeschoben. Die Filterkartusche ist dann mittels Dichtungen 22,23, die zwischen den Stirnringen 7,8. und dem Gehäuse 1 angeordnet sind, nach außen abgedichtet. Eine umlaufende Schulter 24 am außen liegenden Ende des Stirnrings 7 dient als Anschlag, welcher die gewünschte Einschubtiefe der Filterkartusche in das Gehäuse 1 festlegt.

Im Betrieb strömt das Feed von links in das Innere des Stirnrings 7, von dort aus in die Kanäle der Hohlfasermembranen 2, auf der rechten Seite in Figur 1 in den Innenraum des Stirnrings 8 und verlässt dann als Retentat die Filterkartusche. Das durch die Membranen hindurchtretende Permeat gelangt zunächst in den Hohlraum, der von den Halbschalen 45,46 gebildet wird, und durch Öffnungen 25,26 in den Halbschalen 45,46 nach außen in den Innenraum des Gehäuses 1.

Die Stirnringe 7,8, das Zulauf- und Ablaufrohr 11, die Halbschalen 45,46 und die Spannbänder 20,21 bestehen aus Metall. Die Pottings 3,4 bestehen aus einer thermoplastischen Kunststoff-Vergussmasse. Als Hohlfasermembranen 2 können sämtliche üblichen Membrantypen verwendet werden.

Zur Montage werden die beiden metallischen Stirnringe 7,8 von beiden Seiten auf die Hälse 5,6 der Pottings 3,4 gestülpt. Die beiden halbrohrförmigen Halbschalen 45,46 werden von beiden Seiten um das Faserbündel mit den Pottings 3,4 herumgelegt. Die Halbschalen 45,46 sind mit zwei umlaufenden Vorsprüngen 16,17 versehen, die in entsprechende Nuten 18,19 der Stirnringe 7,8 eingreifen. Die zwei Spannbänder 20,21 greifen dann in die Nuten 27,28 der Halbschalen 45,46 ein, um die Halbschalen 45,46 fest mit dem Faserbündel und den Pottings 3,4 zu fixieren.

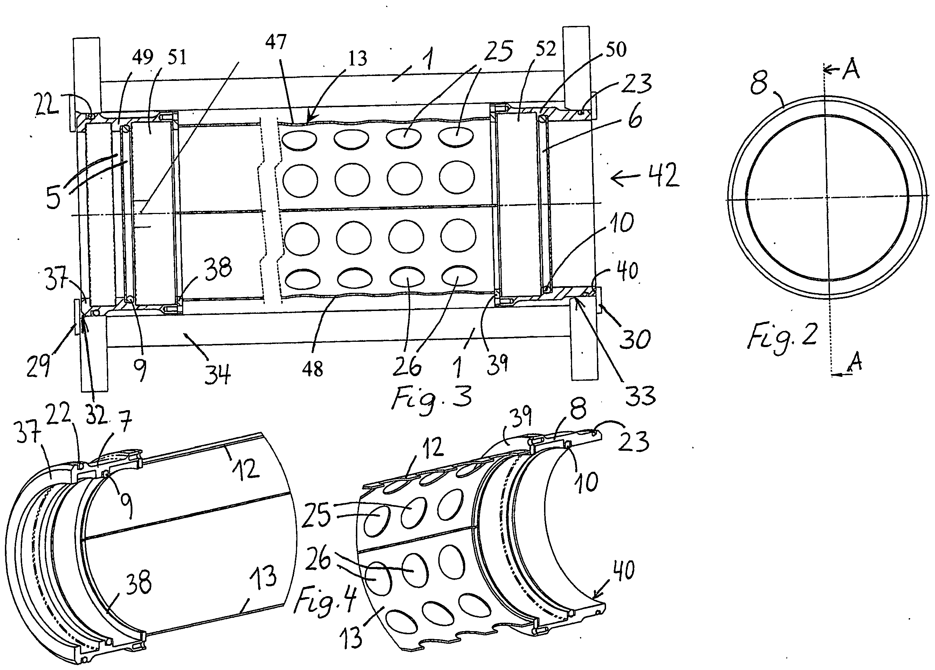

Das zweite Ausführungsbeispiel nach den Figuren 2 bis 4 ist wie folgt geändert gegenüber dem ersten Ausführungsbeispiel: Die Hohlfasermembranen sowie das Zulauf- und Ablaufrohr sind in Figur 3 nicht eingezeichnet.

Die Pottings 51,52 werden mit den Stirnringen 49,50 mittels einer Halterung 13 aus zwei halbrohrförmigen Halbschalen 47,48, die durch Längsteilung eines Rohrstückes entstanden sind, aneinander fixiert. Dazu dienen die Flansche 38,39 der Halbschalen 47,48, die an die entsprechenden Flansche der Stirnringe 7,8 geschraubt sind.

Beim Einbau wird die Filterkartusche in das Gehäuse 1 von links eingeschoben. Die Filterkartusche ist dann mittels Dichtungen 22,23, die zwischen den Stirnringen 49,50 und dem Gehäuse 1 angeordnet sind, nach außen abgedichtet. Ein Flansch 37 und die Stirnseite 40 am außen liegenden Ende der Stirnringe 49,50 dienen zusammen mit angeschraubten Anschlagringen 29,30 zum Festlegen der Filterkartusche im Gehäuse 1.

Zur Montage werden die beiden metallischen Stirnringe 49,50 von beiden Seiten auf die Pottings 51,52 gestülpt. Die beiden halbrohrförmigen Halbschalen 47,48 werden von beiden Seiten um das Faserbündel mit den Pottings 51,52 herumgelegt und an den Flanschen 38,39 mit den inneren Endflächen der Stirnringe 49,50 verschraubt, um die Halbschalen 47,48 fest mit dem Faserbündel und den Pottings 51,52 zu fixieren.

Sämtliche Dichtungen 22,23, die vorzugsweise aus Gummi bestehen, als O-Ringe ausgebildet sind und die die Filterkartusche nach außen abdichten, liegen zwischen den Stirnringen 49,50 und dem Gehäuse 1, nicht aber an den Pottings 51,52 an. Keine Dichtung 5,6, welche die Pottings 51,52 berührt, hat einen Kontakt mit dem Gehäuse 1, so dass ein Verkleben der Pottings 51,52 aufgrund des im Betrieb verwendeten Lösungsmittels im Feed beim Herausnehmen der Filterkartusche aus dem Gehäuse 1 keinerlei Probleme verursacht. Wie bereits ausgeführt worden ist, ist die Filterkartusche einseitig von links montierbar.

Beim Einzelmodul nach den Figuren 2 bis 4 sind außerdem zwei Einführungsschrägen 32,33 zu erkennen. Hinzuweisen sei ferner noch auf die Führungsleisten 34 für die Kartuschenmontage.

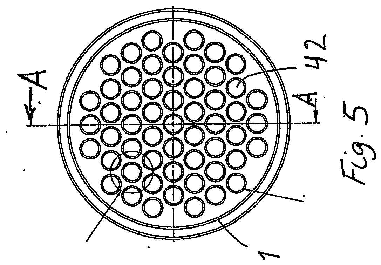

In entsprechender Weise kann bei einem dritten Ausführungsbeispiel ein Gehäuse 1 mit mehreren Aufnahmen für Filterkartuschen 42, z. B. für 3, 7, 19 oder 55 Kartuschen vorgesehen sein, Figur 5. Die Filterkartuschen 42 können dann, wie oben beschrieben, in das Gehäuse 1 des Mehrfachmoduls eingeschoben werden. Die Faserbündel werden dann zusammen durch nur einen Feedstutzen angeströmt. Die Faserbündel teilen sich einen Permeatraum. In diesem Fall können allerdings keine Faserbündel einzeln abgeschaltet werden. Falls weniger Filterkartuschen notwendig sind, können einzelne Aufnahmeplätze blind gesetzt werden, also verschlossen werden. Das Gehäuse kann gegebenenfalls innere Rohre aufweisen, die vorzugsweise mit Rippen versehen sind, um den Innenraum des Gehäuses zu erwärmen, beispielsweise mittels Produktdampf. Möglich ist es auch, die einzelnen Aufnahmen derart mit separaten Rohren zu versehen, dass die Faserbündel auch einzeln abschaltbar sind.

Beim Multimodul nach der Figur 5 sind 55 Kartuschen 42 entsprechend der Kartusche in Figur 4 mit jeweils ca. 580 Fasern, also insgesamt mit ca. 32.000 Fasern erkennbar.

### Bezugszeichenliste

- 1: Gehäuse
- 2: Hohlfasermembran (Schlauchmembran)
- 3: Potting
- 4: Potting
- 5: Hals des Pottings
- 6: Hals des Pottings
- 7: Stirnring
- 8: Stirnring
- 9: Dichtung
- 10: Dichtung
- 11: Zulauf- und Ablaufrohr
- 12: Halterung
- 13: Halterung
- 14: umlaufender Vorsprung
- 15: umlaufender Vorsprung
- 16: umlaufender Vorsprung
- 17: umlaufender Vorsprung
- 18: umlaufende Nut
- 19: umlaufende Nut
- 20: Spannband
- 21: Spannband
- 22: Dichtung
- 23: Dichtung
- 24: Schulter
- 25: Öffnung
- 26: Öffnung
- 27: Nut
- 28: Nut
- 29: Anschlagring
- 30: Anschlagring
- 32: Einführungsschräge
- 33: Einführungsschräge
- 34: Führungsleiste
- 37: Flansch
- 38: Flansch
- 39: Flansch
- 40: Stirnseite
- 42: Kartusche
- 45: Halbschale
- 46: Halbschale
- 47: Halbschale
- 48: Halbschale
- 49: Stirnring
- 50: Stirnring
- 51: Pottin
- 52: Potting

## Patentansprüche

1. Membranmodul für die Stofftrennung, insbesondere mittels Querstromfiltration, umfassend ein Gehäuse (1) und mindestens eine darin angeordnete, auswechselbare, selbsttragende Filterkartusche mit, vorzugsweise in Längsrichtung angeordneten, semipermeablen Hohlfasermembranen (2), die an ihren Enden in einer Vergussmasse (Potting) (3,4) eingebettet sind,
**dadurch gekennzeichnet,**
**dass** beide Pottings (3, 4) mit Endkappen, insbesondere mit hülsenförmigen Stirnringen (7,8) versehen sind und dass die Filterkartusche eine Halterung (12, 13) zum Fixieren der Endkappen bzw. Stirnringe an den Pottings umfasst, wobei die Filterkartusche von einer Seite des Gehäuses (1) in dieses einbaubar und aus diesem entnehmbar ist; und dass die Halterung als ein den äußeren Mantel der Kartusche bildendes Zwischenrohr ausgebildet ist, welches aus mehreren, miteinander verbundenen, längs geteilten Schalen, insbesondere aus zwei halbrohrförmigen Halbschalen (12, 13), besteht, die insbesondere Öffnungen (25, 26) für den Permeataustritt aufweisen.

2. Membranmodul nach Anspruch 1 oder 2, **dadurch gekennzeichnet, dass** die Halterung die Stirnringe an den Pottings formschlüssig mittels Vorsprüngen (14, 15, 16, 17) und gegebenenfalls Ausnehmungen (18, 19) fixiert.

3. Membranmodul nach einem der vorhergehenden Ansprüche, **dadurch gekennzeichnet, dass** die längs geteilten Schalen lösbar, insbesondere mit Spannbändern (20, 21) oder mit verschraubten Flanschen (38, 39), an den Stirnringen und Pottings befestigt sind.

4. Membranmodul nach einem der vorhergehenden Ansprüche, **dadurch gekennzeichnet, dass** die Pottings gegenüber den Stirnringen abgedichtet sind.

5. Membranmodul nach einem der vorhergehenden Ansprüche, **dadurch gekennzeichnet, dass** die Halterung die Stirnringe relativ zueinander fixiert.

6. Membranmodul nach einem der vorhergehenden Ansprüche, **dadurch gekennzeichnet, dass** die Stirnringe aus Metall bestehen.

7. Membranmodul nach einem der vorhergehenden Ansprüche, **dadurch gekennzeichnet, dass** die Halterung aus Metall besteht.

8. Membranmodul nach einem der vorhergehenden Ansprüche, **dadurch gekennzeichnet, dass** die Stirnringe gegen das Gehäuse abgedichtet sind.

9. Membranmodul nach einem der vorhergehenden Ansprüche, **dadurch gekennzeichnet, dass** das Gehäuse mehrere Aufnahmeplätze für jeweils eine Filterkartusche aufweist.

10. Membranmodul nach Anspruch 9, **dadurch gekennzeichnet, dass** die Filterkartuschen einen gemeinsamen, außerhalb der Hohlfasern liegenden Permeatraum haben.

11. Membranmodul nach Anspruch 9 oder 10, **dadurch gekennzeichnet, dass** ein gemeinsames, mit den Innenseiten der Hohlfasern verbundenes Zulaufrohr vorgesehen ist.

12. Membranmodul nach einem der Ansprüche 9 bis 11, **dadurch gekennzeichnet, dass** nicht benutzte Aufnahmeplätze lösbar verschlossen sind.

13. Membranmodul nach einem der Ansprüche 9 bis 12, **dadurch gekennzeichnet, dass** der Innenraum des Gehäuses einen Wärmetauscher aufweist.

14. Membranmodul nach einem der Ansprüche 9, 10, 12 oder 13, **dadurch gekennzeichnet, dass** jeder Aufnahmeplatz ein separates Zulaufrohr aufweist.

## Claims

1. Membrane module for the separation of substances, in particular by cross-flow filtration, comprising a housing (1) and at least one self-supporting, replaceable filter cartridge arranged therein and having semipermeable hollow fibre membranes (2), preferably arranged in the longitudinal direction, which are embedded at their ends in a casting compound (potting compound) (3, 4), **characterised in that** the two potting bodies (3, 4) are provided with end caps, in particular sleeve-shaped end rings (7, 8), and **in that** the filter cartridge comprises a support (12, 13) for fixing the end caps or end rings to the potting bodies, the filter cartridge being, from one side of the housing (1), installable in and removable from said housing, and **in that** the support is formed as an intermediate pipe that forms the outer casing of the cartridge and consists of a plurality of interconnected, longitudinally divided shells, in particular of two semi-tubular half-shells (12, 13), which comprise in particular openings (25, 26) for the outflow of permeate.

2. Membrane module according to either claim 1 or claim 2, **characterised in that** the support fixes the end rings to the potting bodies in an interlocking manner by means of projections (14, 15, 16, 17) and possibly by means of recesses (18, 19).

3. Membrane module according to any of the preceding claims, **characterised in that** the longitudinally divided shells are detachably fastened to the end rings and potting bodies, in particular by means of tensioning straps (20, 21) or bolted flanges (38, 39).

4. Membrane module according to any of the preceding claims, **characterised in that** the potting bodies are sealed with respect to the end rings.

5. Membrane module according to any of the preceding claims, **characterised in that** the support fixes the end rings relative to one another.

6. Membrane module according to any of the preceding claims, **characterised in that** the end rings are made of metal.

7. Membrane module according to any of the preceding claims, **characterised in that** the support is made of metal.

8. Membrane module according to any of the preceding claims, **characterised in that** the end rings are sealed off from the housing.

9. Membrane module according to any of the preceding claims, **characterised in that** the housing comprises a plurality of seats for one filter cartridge each.

10. Membrane module according to claim 9, **characterised in that** the filter cartridges have a common permeate chamber located outside of the hollow fibres.

11. Membrane module according to either claim 9 or claim 10, **characterised in that** a common inlet pipe connected to the inner sides of the hollow fibres is provided.

12. Membrane module according to any of claims 9 to 11, **characterised in that** seats that are not used are closed in a detachable manner.

13. Membrane module according to any of claims 9 to 12, **characterised in that** the inner chamber of the housing comprises a heat exchanger.

14. Membrane module according to any of claims 9, 10, 12 or 13, **characterised in that** each seat has a separate inlet pipe.

## Revendications

1. Module de membrane pour la séparation de matières, en particulier au moyen d'une filtration à courant transversal, comprenant un boîtier (1) et au moins une cartouche de filtre autoportante et interchangeable, laquelle est disposée à l'intérieur de ce dernier et comporte des membranes à fibres creuses (2) semi-perméables qui sont disposées de préférence dans la direction longitudinale et dont les extrémités sont intégrées dans une masse de scellement (enrobage) (3, 4), **caractérisé en ce que**, les deux enrobages (3, 4) sont pourvues de bouchons d'extrémité, en particulier des bagues frontales (7, 8) en forme de douilles ; et **caractérisé en ce que** la cartouche de filtre comprend un support (12, 13) qui est destiné à la fixation des bouchons d'extrémité, respectivement des bagues frontales, sur les enrobages et dans lequel la cartouche de filtre peut, depuis une face du boîtier (1), être mise en place dans celui-ci et extraite hors de celui-ci ; et **caractérisé en ce que** le support est conçu sous la forme d'un tube intermédiaire qui forme la gaine extérieure de la cartouche et qui est constitué de plusieurs coques séparées dans leur longueur et reliées entre elles, en particulier de deux demi-coques (12, 13) de forme semi-tubulaire qui présentent en particulier des ouvertures (25, 26) pour la sortie du perméat.

2. Module de membrane selon la revendication 1 ou 2, **caractérisé en ce que** le support permet de fixer les bagues frontales aux enrobages par liaison de forme, au moyen de saillies (14, 15, 16, 17) et éventuellement de cavités (18, 19).

3. Module de membrane selon l'une des revendications précédentes, **caractérisé en ce que** les coques séparées dans leur longueur sont attachées de manière amovible aux bagues frontales et aux enrobages, en particulier au moyen de bandes de tension (20, 21) ou de brides (38, 39) vissées.

4. Module de membrane selon l'une des revendications précédentes, **caractérisé en ce que** les enrobages sont étanchéifiés vis-à-vis des bagues frontales.

5. Module de membrane selon l'une des revendications précédentes, **caractérisé en ce que** le support permet de fixer les bagues frontales les unes par rapport aux autres.

6. Module de membrane selon l'une des revendications précédentes, **caractérisé en ce que** les bagues frontales sont constituées de métal.

7. Module de membrane selon l'une des revendications précédentes, **caractérisé en ce que** le support est constitué de métal.

8. Module de membrane selon l'une des revendications précédentes, **caractérisé en ce que** les bagues frontales sont scellées contre le boîtier.

9. Module de membrane selon l'une des revendications précédentes, **caractérisé en ce que** le boîtier présente plusieurs emplacements de réception pour respectivement une cartouche de filtre.

10. Module de membrane selon la revendication 9, **caractérisé en ce que** les cartouches de filtre possèdent une chambre de perméat en commun qui se trouve à l'extérieur des fibres creuses.

11. Module de membrane selon la revendication 9 ou 10, **caractérisé en ce qu'**un tube d'amenée en commun est prévu, lequel est relié aux parois internes des fibres creuses.

12. Module de membrane selon l'une des revendications 9 à 11, **caractérisé en ce que** les emplacements de réception inoccupés sont obturés de manière amovible.

13. Module de membrane selon l'une des revendications 9 à 12, **caractérisé en ce que** la paroi interne du boîtier présente un échangeur de chaleur.

14. Module de membrane selon l'une des revendications 9, 10, 12 ou 13, **caractérisé en ce que** chaque emplacement de réception présente un tube d'amenée distinct.
